# EUROPEAN PATENT APPLICATION

(11) **EP 3 062 472 A1**
(43) Date of publication of application: **31.08.2016**
(21) Application number: 14801565.4
(22) Date of filing: 16.05.2014
(51) Int. Cl.: H04L 29/06

(54) **METHOD, APPARATUS AND SYSTEM FOR DISCOVERING PATH COMPUTATION ELEMENT**

(30) Priority: 25.10.2013 CN 201310512310
(71) Applicant: ZTE Corporation, Shenzhen, Guangdong 518057 (CN)
(72) Inventor: LU, Gang, Shenzhen Guangdong 518057 (CN); WANG, Zhihong, Shenzhen Guangdong 518057 (CN)
(74) Representative: Novagraaf Technologies
(86) International application number: PCT/CN2014/077726
(87) International publication number: WO 2014/187283

(57) **Abstract**

The disclosure provides a method, device and system for discovering a Path Computation Element (PCE). A proxy server corresponds to PCEs of the same layer, wherein a method applied to the proxy server includes that: state information of all PCEs of a current layer is stored; a first request for querying state information of a PCE of the current layer is received; and the state information to-be-queried is provided to an initiator of the first request. On the basis of an existing multi-layer PCE architecture, the disclosure enables all PCEs of the same layer to correspond to a proxy server, and cross-layer/grade PCE information can be obtained by interaction between proxy servers. Furthermore, the method simplifies a mechanism for querying PCE state information and a proxy server is responsible for transmitting the state information, thus largely saving network broadband resources. In the meanwhile, the method is easy to implement and has high applicability.

## Description

### Technical Field

The disclosure relates to the field of communications, particularly to a method, device and system for discovering a Path Computation Element (PCE).

### Background

Path computation is required in a Multi-Protocol Label Switching (MPLS) network and an Automatically Switched Optical Network (ASON)/a Generalized Multi-Protocol Label Switching (GMPLS) network so as to implement traffic engineering. A conventional distributed path computation method has much functional and performance limitation in a multi-layer multi-domain network, and in this case, it is proposed by the Internet Engineering Task Force (IETF) that a path computation task is implemented by a centralized PCE.

The PCE is configured to process all Path Computation Requests (PCReq) in one domain. Correspondingly, a requester of path computation is called a Path Computation Client (PCC). The PCE and the PCC intercommunicate with each other by using a Path Computation Element Communication Protocol (PCEP). The PCC transmits a PCReq to the PCE, and the PCE computes a constraint path according to its own Traffic Engineering Database (TED), and after the computation, the PCE returns a path result to the PCC through a Path Computation Reply (PCRep), thus a path computation is completed.

In a multi-layer multi-domain environment, a path that needs to be computed may be across a plurality of Autonomous Systems (AS). In other words, the path is a cross-domain path. In this case, PCEs of all domains are required to cooperate so as to compute the path (generally, it is necessary to compute a sequence of the domains before further computing the cross-domain path). A hierarchical PCE is proposed in Request for Comments (RFC) 6805 (The Application of the PCE Architecture to the Determination of a Sequence of Domains in MPLS and GMPLS) to compute the sequence of the domains. A layer-based PCE architecture is introduced into the hierarchical PCE, a PCE of a higher layer is called a parent PCE and a PCE of a lower layer is called a child PCE. The parent PCE constructs inter-domain topology through configuration or collection from each child PCE, and computes the sequence of the domains through which the cross-domain path passes according to the inter-domain topology, coordinates all the child PCEs to compute the path in each domain, collects path computation results of all the child PCEs, finally selects an optimal cross-domain path and returns the optimal cross-domain path to a child PCE of an initial domain.

Before requesting a PCE for path computation, the PCC needs to determine state information of the PCE, and the state information is called a PCE Discovery (PCED) attribute. A method for implementing automatic PCED by using an Open Shortest Path First (OSPF) protocol to flood PCED information in an Interior Gateway Protocol (IGP) domain is defined in RFC5088 (OSPF Protocol Extensions for PCED). The method can notify an attribute, capability information and so on of a PCE to neighboring PCEs or PCCs so that the PCCs or the PCEs are able to find proper PCEs and request for path computation, wherein the PCED information also mainly includes: an Internet Protocol (IP) address (a PCC may access the PCE accordingly) of the PCE, a service range (intra-Area, inter-area, intra-AS, inter-AS and so on) of the PCE, an Identifier (ID) of a PCE management domain (in which path computation may be provided), an ID of a PCE neighbor management domain, and a PCE capability feature (such as an algorithm capability) of the PCE.

In practical application, cross-layer PCE deployment becomes complicated after the introduction of the hierarchical PCE. There are two major methods as follows for PCED of each domain in the related art. The first method is an automatic PCED technology in which a new inter-IGP domain is formed among domains by PCEs of all domains and RFC5088 is applied. However, this method has many problems. The first problem is a security problem. The domains are not trusted by each other, but automatic discovery, which is performed in a broadcast mode, does not have an authenticating capability. Secondly, the domains are far from each other, and reliability can be hardly ensured, while there is a problem of intercommunication of different manufacturers, and the domains can be hardly unified. Besides, PCEs of different layers, e.g. parent PCEs, are generally controlled by an operator or a third party capable of supervision, and the PCEs themselves can hardly participate in automatic discovery of the IGP domain to have their information exposed in the IGP domain. The other method is a patent whose publication number is CN101106483. As shown in Fig. 1, the method introduces a Programmable Device Server (PDS) proxy server for each AS domain so as to implement PCED of a PCC of a current domain, and implement cross-AS discovery of PCEs through PDS interactions among different ASs. However, the method proposed by the patent requires to configure a PDS for each AS first, and after hierarchical PCEs are configured, there may be relatively high cost, and PCED of different layers cannot be supported, and can be only implemented domain by domain between adjacent domains. Besides, intra-PCC discovery and intra-PCED are mixed, thus resulting in relatively large authenticating pressure, while RFC5088 is substantially competent for PCED of a current domain by using a PCC of the current domain in an AS, and a PDS is not apparently advantageous.

### Summary

A method, device and system for discovering a Path Computation Element (PCE) are provided by embodiments of the disclosure, so that cross-layer/grade PCE information can be obtained.

A method for discovering a PCE is provided according to an embodiment of the disclosure, applied to a proxy server corresponding to PCEs of a same layer, wherein the method comprises: storing state information of all PCEs of a current layer; receiving a first request for querying state information of a PCE of the current layer; and providing queried state information to an initiator of the first request.

Optionally, wherein the initiator of the first request is a PCE of another layer or a PCE of the current layer.

Optionally, wherein the method further comprises: receiving a second request for querying state information of a PCE of another layer, wherein an initiator of the second request is a PCE of the current layer; acquiring the state information of the PCE of the another layer from a proxy server corresponding to the PCE of the another layer; and providing the acquired state information to the initiator of the second request.

Optionally, wherein providing the queried state information to the initiator of the first request comprises: when the first request is initiated by the PCE of the current layer, authenticating an Identity (ID) of the initiator of the first request, and when the ID of the initiator of the first request is authenticated successfully, providing the queried state information to the initiator of the first request; and/or, when the first request is initiated by the PCE of the another layer, authenticating an ID of a proxy server corresponding to the PCE of the another layer, and when the ID of the proxy server corresponding to the PCE of the another layer is authenticated successfully, providing the queried state information to the initiator of the first request.

Optionally, wherein acquiring the state information of the PCE of the another layer from the proxy server corresponding to the PCE of the another layer comprises: authenticating an ID of the initiator of the second request; and when the ID of the initiator of the second request is authenticated successfully, acquiring the state information of the PCE of the another layer from the proxy server corresponding to the PCE of the another layer.

Optionally, wherein the method further comprises: when stored state information of a PCE of the current layer changes, transmitting a changed content to all the PCEs of the current layer so as to enable all the PCEs of the current layer to update their respective databases, wherein the databases are configured to store state information of other PCEs of the current layer.

A method for discovering a PCE is provided according to another embodiment of the disclosure, applied to a PCE, wherein the method comprises: when it is needed to query state information of a PCE of a current layer, transmitting a first request to a proxy server corresponding to the PCE of the current layer; and acquiring state information which is returned by the proxy server corresponding to the PCE of the current layer and corresponds to the first request, wherein the proxy server corresponding to the PCE of the current layer stores state information of all PCEs of the current layer.

Optionally, wherein the method comprises: when it is needed to query state information of a PCE of another layer, transmitting a second request to the proxy server corresponding to the PCE of the current layer; and acquiring state information which is returned by the proxy server corresponding to the PCE of the current layer and corresponds to the second request; wherein the state information corresponding to the second request is acquired by the proxy server corresponding to the PCE of the current layer from a proxy server corresponding to the PCE of the another layer.

A device for discovering a PCE is provided according to another embodiment of the disclosure, applied to a proxy server corresponding to PCEs of a same layer, wherein the device comprises: a storing module, configured to store state information of all PCEs of a current layer; a first receiving module, configured to receive a first request for querying state information of a PCE of the current layer; and a first service module, configured to provide queried state information to an initiator of the first request.

Optionally, wherein the initiator of the first request is a PCE of another layer or a PCE of the current layer.

Optionally, wherein the device further comprises: a second receiving module, configured to receive a second request for querying state information of a PCE of another layer, wherein an initiator of the second request is a PCE of the current layer; a first acquiring module, configured to acquire the state information of the PCE of the another layer from a proxy server corresponding to the PCE of the another layer; and a second service module, configured to provide the acquired state information to the initiator of the second request.

Optionally, wherein the first service module comprises: a first service sub-module, configured to authenticate, when the first request is initiated by the PCE of the current layer, an Identity (ID) of the initiator of the first request, and when the ID of the initiator of the first request is authenticated successfully, provide the queried state information to the initiator of the first request; and a second service sub-module, configured to authenticate, when the first request is initiated by the PCE of the another layer, an ID of a proxy server corresponding to the PCE of the another layer, and when the ID of the proxy server corresponding to the PCE of the another layer is authenticated successfully, provide the queried state information to the initiator of the first request.

Optionally, wherein the first acquiring module comprises: a second authenticating sub-module, configured to authenticate an ID of the initiator of the second request; and an acquiring sub-module, configured to acquire, when the ID of the initiator of the second request is authenticated successfully by the second authenticating sub-module, the state information of the PCE of the another layer from the proxy server corresponding to the PCE of the another layer.

Optionally, wherein the device further comprises: a notifying module, configured to transmit, when stored state information of a PCE of the current layer changes, a changed content to all the PCEs of the current layer so as to enable all the PCEs of the current layer to update their respective databases, wherein the databases are configured to store state information of other PCEs of the current layer.

A device for discovering a PCE is provided according to another embodiment of the disclosure, applied to a PCE, wherein the device comprises: a first transmitting module, configured to transmit, when it is needed to query state information of a PCE of a current layer, a first request to a proxy server corresponding to the PCE of the current layer; and a second acquiring module, configured to acquire state information which is returned by the proxy server corresponding to the PCE of the current layer and corresponds to the first request, wherein the proxy server corresponding to the PCE of the current layer stores state information of all PCEs of the current layer.

Optionally, wherein the device further comprises: a second transmitting module, configured to transmit, when it is needed to query state information of a PCE of another layer, a second request to the proxy server corresponding to the PCE of the current layer; and a third acquiring module, configured to acquire state information which is returned by the proxy server corresponding to the PCE of the current layer and corresponds to the second request; wherein the state information corresponding to the second request is acquired by the proxy server corresponding to the PCE of the current layer from a proxy server corresponding to the PCE of the another layer.

A system is provided according to another embodiment of the disclosure, comprising Path Computation Elements (PCE) of a plurality of layers and a plurality of proxy servers, wherein the proxy servers further comprise: the device applied to the proxy server; and the PCEs further comprise: the device applied to the PCE.

Optionally, wherein each proxy server is correspondingly configured with a backup proxy server.

The solution provided by the embodiments of the disclosure has the following beneficial effects:
On the basis of an existing multi-layer PCE architecture, all PCEs of the same layer are enabled to correspond to a proxy server in the embodiments of the disclosure, and cross-layer/grade PCE information can be obtained by interaction between proxy servers. Furthermore, the method simplifies a mechanism for querying PCE state information and a proxy server is responsible for transmitting the state information, thus largely saving network broadband resources. In the meanwhile, the method is easy to implement and has high applicability.

### Brief Description of the Drawings

Fig. 1 is a schematic diagram of a network structure in related art;
Fig. 2 is a schematic diagram of steps of a PCED method applied to a proxy server according to an embodiment of the disclosure;
Fig. 3 is a schematic diagram of steps of a PCED method applied to a PCE according to an embodiment of the disclosure;
Fig. 4 is an architecture diagram of a proxy server according to an embodiment of the disclosure;
Fig. 5 is a schematic diagram of query of state information among PCEs of the same layer according to an embodiment of the disclosure;
Fig. 6 is a schematic diagram of query of state information among PCEs of different layers according to an embodiment of the disclosure;
Fig. 7 is a schematic diagram of pushing of change information by a proxy server according to an embodiment of the disclosure;
Fig. 8 is a structural diagram of a PCED device applied to a proxy server according to an embodiment of the disclosure; and
Fig. 9 is a structural diagram of a PCED device applied to a PCE according to an embodiment of the disclosure.

### Detailed Description of the Embodiments

Detailed description will be provided below in combination with the accompanying drawings and specific embodiments so that the technical problem to be solved by the disclosure, and the technical solution and advantages of the disclosure are clearer.

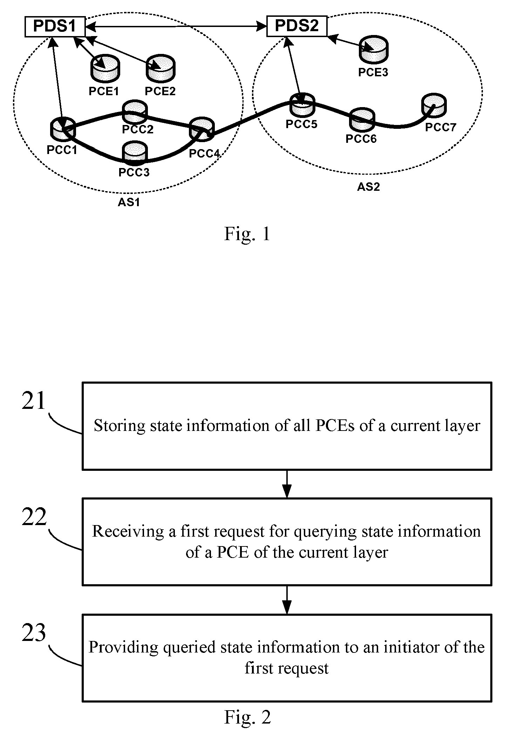

Fig. 2 is a schematic diagram of steps of a PCED method applied to a proxy server according to an embodiment of the disclosure. As shown in Fig. 2, a method for discovering a PCE is applied to a proxy server, and the proxy server corresponds to PCEs of a same layer, wherein the method comprises:
Step 21: Storing state information of all PCEs of a current layer.
Step 22: Receiving a first request for querying state information of a PCE of the current layer.
Step 23: Providing queried state information to an initiator of the first request.

On the basis of an existing multi-layer PCE architecture, the embodiment of the disclosure enables all PCEs of the same layer to correspond to a proxy server, and cross-layer/grade PCE information can be obtained by interaction between proxy servers. Furthermore, the method simplifies a mechanism for querying PCE state information and a proxy server is responsible for transmitting the state information, thus largely saving network broadband resources. In the meanwhile, the method is easy to implement and has high applicability.

Specifically, the initiator of the first request is a PCE of another layer or a PCE of the current layer. In other words, the method of the present embodiment is responsible for query of state information among PCEs of the current layer and enables a PCE of another layer to query state information of the PCE of the current layer.

Besides, the PCE of the current layer may also acquire the state information of the PCE of the another layer by its own proxy server, that is, the method of the embodiment of the disclosure further includes the following steps.

Step 24: Receiving a second request for querying state information of a PCE of another layer, wherein an initiator of the second request is a PCE of the current layer.

Step 25: Acquiring the state information of the PCE of the another layer from a proxy server corresponding to the PCE of the another layer.

Step 26: Providing the acquired state information to the initiator of the second request.

In terms of security, in the embodiment of the disclosure, Step 23 specifically comprises the following steps.

Step 231: When the first request is initiated by the PCE of the current layer, authenticating an Identity (ID) of the initiator of the first request, and when the ID of the initiator of the first request is authenticated successfully, providing the queried state information to the initiator of the first request; and/or,

Step 232: When the first request is initiated by the PCE of the another layer, authenticating an ID of a proxy server corresponding to the PCE of the another layer, and when the ID of the proxy server corresponding to the PCE of the another layer is authenticated successfully, providing the queried state information to the initiator of the first request.

ID authentication of the present embodiment may be implemented flexibly. PCEs of the same layer may be from different ASs, and some ASs are not necessarily reliable, thus the method of the present embodiment may use ID authentication to refuse those unreliable PCEs acquiring locally stored state information. Besides, a proxy server corresponding to a PCE of a higher layer may also use ID authentication to refuse a query request of a proxy server of a lower layer (if a PCE for monitoring is a PCE of a higher layer, the PCE cannot expose information to a PCE of a lower layer).

Besides, in the embodiment of the disclosure, Step 25 comprises the following steps.

Step 251: Authenticating an ID of the initiator of the second request.

Step 252: When the ID of the initiator of the second request is authenticated successfully, acquiring the state information of the PCE of the another layer from the proxy server corresponding to the PCE of the another layer.

The method of the present embodiment also uses ID authentication to refuse an unreliable PCE of the current layer acquiring state information of the PCE of the another layer due to the same reason as above.

Besides, in the embodiment of the disclosure, the method further comprises the following step.

Step 27: when stored state information of a PCE of the current layer changes, transmitting a changed content to all the PCEs of the current layer so as to enable all the PCEs of the current layer to update their respective databases, wherein the databases are configured to store state information of other PCEs of the current layer.

As a network is constructed constantly, the state information of the PCEs of the current layer may change, thus the method of the present embodiment may initiatively push change information (carrying a change content) to the PCEs of the current layer. An ID authentication process may also be added to the pushing of the change information, so that a PCE that fails to pass the authentication cannot acquire the changed content.

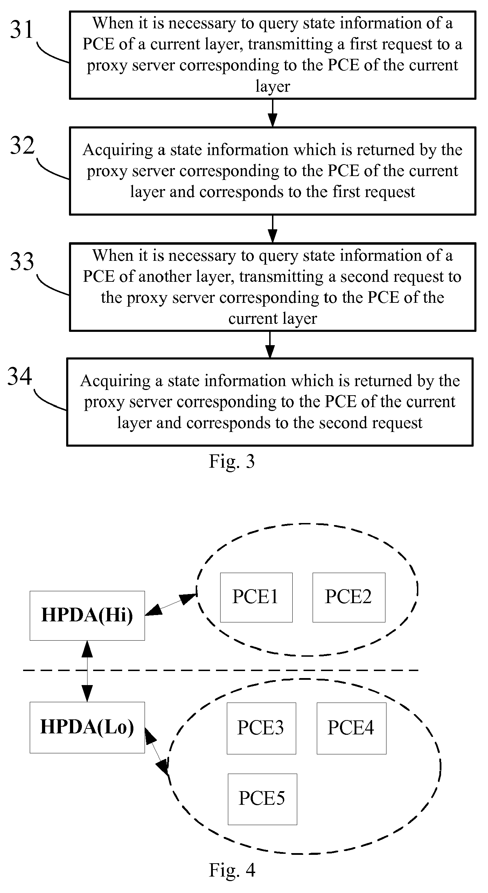

Besides, Fig. 3 is a schematic diagram of steps of a PCED method applied to a PCE according to an embodiment of the disclosure. As shown in Fig. 3, an embodiment of the disclosure further provides a method for discovering a PCE, applied to a PCE, wherein the method comprises:
Step 31: When it is needed to query state information of a PCE of a current layer, transmitting a first request to a proxy server corresponding to the PCE of the current layer.
Step 32: Acquiring state information which is returned by the proxy server corresponding to the PCE of the current layer and corresponds to the first request,

wherein the proxy server corresponding to the PCE of the current layer stores state information of all PCEs of the current layer.

Besides, the method further comprises the following steps.

Step 33: When it is needed to query state information of a PCE of another layer, transmitting a second request to the proxy server corresponding to the PCE of the current layer.

Step 34: Acquiring state information which is returned by the proxy server corresponding to the PCE of the current layer and corresponds to the second request;

wherein the state information corresponding to the second request is acquired by the proxy server corresponding to the PCE of the current layer from a proxy server corresponding to the PCE of the another layer.

Through a corresponding proxy server, a PCE of the present embodiment acquires to-be-queried state information of a certain PCE, so as to complete path computation. Compared with the related art, the method of the embodiment of the disclosure plans a PCE query mechanism, and state information is acquired by a proxy server, thereby largely saving network broadband resources.

Specific implementation of the methods of the embodiments of the disclosure will be expounded below.

### Embodiment 1: Configuration stage of proxy server

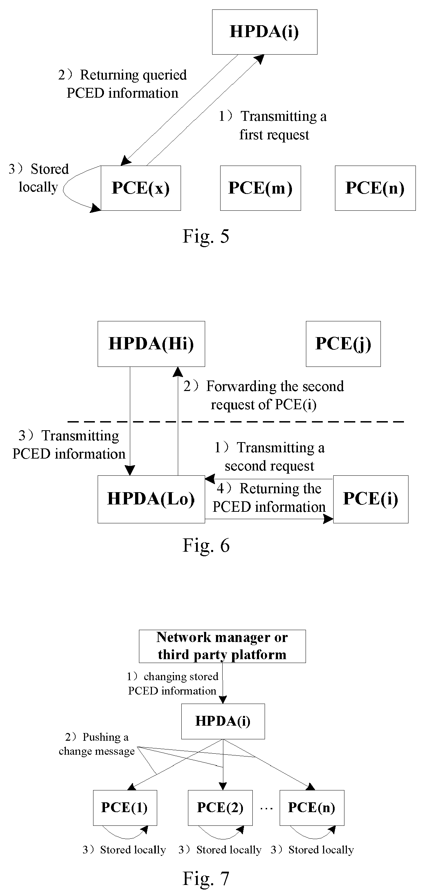

Fig. 4 is an architecture diagram of a proxy server according to an embodiment of the disclosure. As shown in Fig. 4, a network manager or a third party management platform configures a proxy server (e.g., Hierarchy PCE Device Agent (HPDA)) of each layer first. In Fig. 4, HPDA(Hi) is an HPDA of a higher layer and HPDA(Lo) is an HPDA of a lower layer, and a configuration process is described as follows.
1) State information (the aforementioned PCED information) of all PCEs (PCE1 and PCE2 as shown in Fig. 5) belonging to a higher layer is configured into HPDA(Hi), wherein the PCED information may comprise: IP addresses of the PCEs, service ranges (intra-Area, inter-area, intra-AS, inter-AS and so on) of the PCEs, IDs of PCE management domains (in which path computation may be provided to the PCEs), IDs of PCE neighbor management domain, IDs of the PCEs and computation capability features of the PCEs and so on.
2) PCED information of all PCEs (PCE3, PCE4 and PCE5 as shown in Fig. 5) belonging to a lower layer is configured into HPDA(Lo).
3) ID authentication information of PCEs of the same layer is configured into a corresponding HPDA, i.e. ID authentication information of PCE3, PCE4 and PCE5 is configured into HPDA(Lo), and ID authentication information of PCE1 and PCE2 is configured into HPDA(Hi).
4) ID authentication information and address information of HPDA(Hi) are configured into HPDA(Lo), and accordingly, ID authentication information and address information of HPDA(Lo) are configured into HPDA(Hi).
5) An address and an authentication password of HPDA(Lo) are configured for PCE3, PCE4 and PCE5, and an address and an authentication password of HPDA(Hi) are configured for PCE1 and PCE2.

wherein the configuration of the present embodiment may be implemented by the network manager, and may be also implemented in local operation and maintenance.

### Embodiment 2: PCEs of the same layer query a corresponding HPDA for state information of a PCE of a neighboring domain.

Fig. 5 is a schematic diagram of query of state information among PCEs of the same layer according to an embodiment of the disclosure. A corresponding HPDA of a certain PCE layer i as shown in Fig. 5 is denoted by HPDA(i), PCE(x) is a certain PCE of a layer where the HPDA locates, and PCEs of a neighboring domain are PCE(m) and PCE(n) respectively. PCED information of PCE(x), PCE(m) and PCE(n) and related authentication information have been configured on HPDA(i). At the moment, PCE(x) needs to access HPDA(i) to search for the PCED information of PCE(m) and PCE(n), and steps are as follows.

Step 1: PCE(x) transmits a first request to HPDA(i) of a current layer to request for querying the PCED information of PCE(m) and PCE(n) of the neighboring domain.

Step 2: After receiving the first request, HPDA(i) authenticates the legality of PCE(x) according to the preconfigured authentication data, and after the legality is authenticate successfully, HPDA(i) returns the PCED information that needs to be queried to PCE(x) via an automatic discovery response message.

Step 3: PCE(x) acquires the PCED information of PCE(m) and PCE(n) of the same layer, stores the information locally and uses the information when it is necessary to calculate a path through cross-domain PCE cooperation.

### Embodiment 3: A PCE queries a corresponding HPDA for PCED information of a PCE of another layer.

Fig. 6 is a schematic diagram of query of state information among PCEs of different layers according to an embodiment of the disclosure. As shown in Fig. 6, there are HPDAs of two layers, one of which is HPDA(Hi) of a higher layer and the other one is HPDA(Lo) of a lower layer. PCE(i) is a PCE (which may be called a child PCE) in the lower layer, and PCE(j) is a PCE (which may be called a parent PCE) in the higher layer. At the moment, PCE(i) needs to query PCED information of PCE(j) through HPDA(Lo), and steps are as follows.

Step 1: PCE(i) transmits a second request to HPDA(Lo) of the current layer first, so as to query the PCED information of PCE(j) of the higher layer (it is also unnecessary to specify PCE(i), and it may be only to specify the layer of HPDA(Hi)).

Step 2: HPDA(Lo) authenticates the ID legality of PCE (i) first, and if the ID is legal, forwards a query request to HPDA(Hi).

Step 3: HPDA(Hi) authenticates the ID legality of HPDA(Lo), and if the ID is legal, transmits the PCED information of PCE (j) to HPDA(Lo).

Step 4: HPDA(Lo) returns the PCED information of PCE (j) to PCE (i), and PCE (i) locally stores the discovery information of PCE (j). Besides, if the layer of PCE (i) is not specified, PCED information of an available PCE of a higher layer is returned.

### Embodiment 4: An HPDA initiatively pushes changed PCED information of a PCE.

Fig. 7 is a schematic diagram of pushing of change information by a proxy server according to an embodiment of the disclosure. As shown in Fig. 7, there is a PCE layer i, a corresponding HPDA is denoted by HPDA (i), and PCE (1), PCE (2), ..., and PCE(n) are all PCEs in the layer. Steps are as follows.

Step 1: Configuration of a network manager or a third party management platform changes PCED information of a certain PCE of a layer managed by HPDA(i).

Step 2: HPDA(i) pushes a changed content of the PCE to all PCEs of the current layer by means of a notification message.

Step 3: All PCEs that receive the notification message stores a changed content in a local database for use in future path computation.

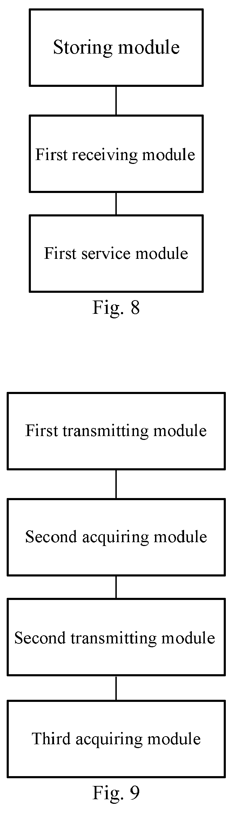

Besides, Fig. 8 is a structural diagram of a PCED device applied to a proxy server according to an embodiment of the disclosure. As shown in Fig. 8, an embodiment of the disclosure further provides a device for discovering a PCE, applied to a proxy server corresponding to PCEs of a same layer, wherein the device comprises:
a storing module, configured to store state information of all PCEs of a current layer;
a first receiving module, configured to receive a first request for querying state information of a PCE of the current layer; and
a first service module, configured to provide queried state information to an initiator of the first request.

wherein the initiator of the first request is a PCE of another layer or a PCE of the current layer.

Besides, in the embodiment of the disclosure, the device further comprises:
a second receiving module, configured to receive a second request for querying state information of a PCE of another layer, wherein an initiator of the second request is a PCE of the current layer;
a first acquiring module, configured to acquire the state information of the PCE of the another layer from a proxy server corresponding to the PCE of the another layer; and
a second service module, configured to provide the acquired state information to the initiator of the second request.

Specifically, in the embodiment of the disclosure, the first service module comprises:
a first service sub-module, configured to authenticate, when the first request is initiated by the PCE of the current layer, an Identity (ID) of the initiator of the first request, and when the ID of the initiator of the first request is authenticated successfully, provide the queried state information to the initiator of the first request; and
a second service sub-module, configured to authenticate, when the first request is initiated by the PCE of the another layer, an ID of a proxy server corresponding to the PCE of the another layer, and when the ID of the proxy server corresponding to the PCE of the another layer is authenticated successfully, provide the queried state information to the initiator of the first request.

Specifically, in the embodiment of the disclosure, the first acquiring module comprises:
a second authenticating sub-module, configured to authenticate an ID of the initiator of the second request; and
an acquiring sub-module, configured to acquire, when the ID of the initiator of the second request is authenticated successfully by the second authenticating sub-module, the state information of the PCE of the another layer from the proxy server corresponding to the PCE of the another layer.

Besides, in the embodiment of the disclosure, the device further comprises:
a notifying module, configured to transmit, when stored state information of a PCE of the current layer changes, a changed content to all the PCEs of the current layer so as to enable all the PCEs of the current layer to update their respective databases, wherein the databases are configured to store state information of other PCEs of the current layer.

Apparently, the device of the present embodiment corresponds to a PCED method applied to a proxy server in an embodiment of the disclosure, and technical effects that can be implemented by the method may be also implemented by the device of the present embodiment.

Besides, Fig. 9 is a structural diagram of a PCED device applied to a PCE according to an embodiment of the disclosure. As shown in Fig. 9, an embodiment of the disclosure further provides a device for discovering a PCE, applied to a PCE, wherein the device comprises:
a first transmitting module, configured to transmit, when it is needed to query state information of a PCE of a current layer, a first request to a proxy server corresponding to the PCE of the current layer; and
a second acquiring module, configured to acquire state information which is returned by the proxy server corresponding to the PCE of the current layer and corresponds to the first request,
wherein the proxy server corresponding to the PCE of the current layer stores state information of all PCEs of the current layer.

Besides, in the embodiment of the disclosure, the device further comprises:
a second transmitting module, configured to transmit, when it is needed to query state information of a PCE of another layer, a second request to the proxy server corresponding to the PCE of the current layer; and
a third acquiring module, configured to acquire state information which is returned by the proxy server corresponding to the PCE of the current layer and corresponds to the second request;
wherein the state information corresponding to the second request is acquired by the proxy server corresponding to the PCE of the current layer from a proxy server corresponding to the PCE of the another layer.

Apparently, the device of the present embodiment corresponds to a PCED method applied to a PCE in an embodiment of the disclosure, and technical effects that can be implemented by the method may be also implemented by the device of the present embodiment.

Besides, an embodiment of the disclosure further provides a system, comprising PCEs of a plurality of layers and a plurality of proxy servers, the proxy servers further comprise: the device applied to the proxy server, i.e. the PCE device, which is provided by the embodiment of the disclosure and, and the PCEs further comprise: the device applied to the PCE, which is provided by the embodiment of the disclosure.

Besides, each proxy server is corresponding configured with a backup proxy server so that when the proxy server fails, a PCE of a corresponding layer can acquire state information of another PCE.

What are described above are only preferred embodiments of the disclosure. It should be pointed out that several improvements and modifications may be also made without departing from the principles of the disclosure for those of ordinary skill in the art. These improvements and modifications should be also regarded as the protection scope of the disclosure.

### Industrial Applicability

The technical solution provided by the embodiments of the disclosure may be applied to path computation in communications so as to save network broadband resources for example, especially in path computation of a multi-layer PCE architecture. All PCEs of the same layer are enabled to correspond to a proxy server, and cross-layer/grade PCE information can be obtained by interaction between proxy servers, thus simplifying a mechanism for querying PCE state information and a proxy server is responsible for transmitting the state information, thus largely saving network broadband resources.

## Claims

1. A method for discovering a Path Computation Element (PCE), applied to a proxy server corresponding to PCEs of a same layer, wherein the method comprises:
storing state information of all PCEs of a current layer;
receiving a first request for querying state information of a PCE of the current layer; and
providing queried state information to an initiator of the first request.

2. The method as claimed in claim 1, wherein the initiator of the first request is a PCE of another layer or a PCE of the current layer.

3. The method as claimed in claim 2, wherein the method further comprises:
receiving a second request for querying state information of a PCE of another layer, wherein an initiator of the second request is a PCE of the current layer;
acquiring the state information of the PCE of the another layer from a proxy server corresponding to the PCE of the another layer; and
providing the acquired state information to the initiator of the second request.

4. The method as claimed in claim 3, wherein providing the queried state information to the initiator of the first request comprises:
when the first request is initiated by the PCE of the current layer, authenticating an Identity (ID) of the initiator of the first request, and when the ID of the initiator of the first request is authenticated successfully, providing the queried state information to the initiator of the first request; and/or,
when the first request is initiated by the PCE of the another layer, authenticating an ID of a proxy server corresponding to the PCE of the another layer, and when the ID of the proxy server corresponding to the PCE of the another layer is authenticated successfully, providing the queried state information to the initiator of the first request.

5. The method as claimed in claim 3, wherein acquiring the state information of the PCE of the another layer from the proxy server corresponding to the PCE of the another layer comprises:
authenticating an ID of the initiator of the second request; and
when the ID of the initiator of the second request is authenticated successfully, acquiring the state information of the PCE of the another layer from the proxy server corresponding to the PCE of the another layer.

6. The method as claimed in claim 1, wherein the method further comprises:
when stored state information of a PCE of the current layer changes, transmitting a changed content to all the PCEs of the current layer so as to enable all the PCEs of the current layer to update their respective databases, wherein the databases are configured to store state information of other PCEs of the current layer.

7. A method for discovering a Path Computation Element (PCE), applied to a PCE, wherein the method comprises:
when it is needed to query state information of a PCE of a current layer, transmitting a first request to a proxy server corresponding to the PCE of the current layer; and
acquiring state information which is returned by the proxy server corresponding to the PCE of the current layer and corresponds to the first request,
wherein the proxy server corresponding to the PCE of the current layer stores state information of all PCEs of the current layer.

8. The method as claimed in claim 7, wherein the method comprises:
when it is needed to query state information of a PCE of another layer, transmitting a second request to the proxy server corresponding to the PCE of the current layer; and
acquiring state information which is returned by the proxy server corresponding to the PCE of the current layer and corresponds to the second request;
wherein the state information corresponding to the second request is acquired by the proxy server corresponding to the PCE of the current layer from a proxy server corresponding to the PCE of the another layer.

9. A device for discovering a Path Computation Element (PCE), applied to a proxy server corresponding to PCEs of a same layer, wherein the device comprises:
a storing module, configured to store state information of all PCEs of a current layer;
a first receiving module, configured to receive a first request for querying state information of a PCE of the current layer; and
a first service module, configured to provide queried state information to an initiator of the first request.

10. The device as claimed in claim 9, wherein the initiator of the first request is a PCE of another layer or a PCE of the current layer.

11. The device as claimed in claim 10, wherein the device further comprises:
a second receiving module, configured to receive a second request for querying state information of a PCE of another layer, wherein an initiator of the second request is a PCE of the current layer;
a first acquiring module, configured to acquire the state information of the PCE of the another layer from a proxy server corresponding to the PCE of the another layer; and
a second service module, configured to provide the acquired state information to the initiator of the second request.

12. The device as claimed in claim 11, wherein the first service module comprises:
a first service sub-module, configured to authenticate, when the first request is initiated by the PCE of the current layer, an Identity (ID) of the initiator of the first request, and when the ID of the initiator of the first request is authenticated successfully, provide the queried state information to the initiator of the first request; and
a second service sub-module, configured to authenticate, when the first request is initiated by the PCE of the another layer, an ID of a proxy server corresponding to the PCE of the another layer, and when the ID of the proxy server corresponding to the PCE of the another layer is authenticated successfully, provide the queried state information to the initiator of the first request.

13. The device as claimed in claim 11, wherein the first acquiring module comprises:
a second authenticating sub-module, configured to authenticate an ID of the initiator of the second request; and
an acquiring sub-module, configured to acquire, when the ID of the initiator of the second request is authenticated successfully by the second authenticating sub-module, the state information of the PCE of the another layer from the proxy server corresponding to the PCE of the another layer.

14. The device as claimed in claim 9, wherein the device further comprises:
a notifying module, configured to transmit, when stored state information of a PCE of the current layer changes, a changed content to all the PCEs of the current layer so as to enable all the PCEs of the current layer to update their respective databases, wherein the databases are configured to store state information of other PCEs of the current layer.

15. A device for discovering a Path Computation Element (PCE), applied to a PCE, wherein the device comprises:
a first transmitting module, configured to transmit, when it is needed to query state information of a PCE of a current layer, a first request to a proxy server corresponding to the PCE of the current layer; and
a second acquiring module, configured to acquire state information which is returned by the proxy server corresponding to the PCE of the current layer and corresponds to the first request,
wherein the proxy server corresponding to the PCE of the current layer stores state information of all PCEs of the current layer.

16. The device as claimed in claim 15, wherein the device further comprises:
a second transmitting module, configured to transmit, when it is needed to query state information of a PCE of another layer, a second request to the proxy server corresponding to the PCE of the current layer; and
a third acquiring module, configured to acquire state information which is returned by the proxy server corresponding to the PCE of the current layer and corresponds to the second request;
wherein the state information corresponding to the second request is acquired by the proxy server corresponding to the PCE of the current layer from a proxy server corresponding to the PCE of the another layer.

17. A system, comprising Path Computation Elements (PCE) of a plurality of layers and a plurality of proxy servers, wherein
the proxy servers further comprise: the device as claimed in any one of claims 9 to 14; and
the PCEs further comprise: the device as claimed in claim 15 or 16.

18. The system as claimed in claim 17, wherein each proxy server is correspondingly configured with a backup proxy server.
